Europäisches Patentamt

European Patent Office

Office européen des brevets

(19)

(11) Veröffentlichungsnummer: **0 473 974 A1**

# EUROPÄISCHE PATENTANMELDUNG

(21) Anmeldenummer: **91113492.2**

(22) Anmeldetag: **12.08.91**

(51) Int. Cl.5: **A01F 12/44**

(30) Priorität: **11.08.90 DE 4025580**

(43) Veröffentlichungstag der Anmeldung:
**11.03.92 Patentblatt 92/11**

(84) Benannte Vertragsstaaten:
**AT BE CH DE DK ES FR GB GR IT LI LU NL SE**

(71) Anmelder: **Klöckner-Humboldt-Deutz AG**
**Otto Strasse 1**
**W-5000 Köln 90(DE)**

(72) Erfinder: **von Allwörden, Wilhelm, Dipl.-Ing.**
**Alpenstrasse 18**
**W-7704 Gailingen(DE)**

(54) **Hangausgleich für Mähdrescher.**

(57) Die Erfindung bezieht sich auf ein Verfahren und eine Vorrichtung für den Einsatz von Mähdreschern in Hanglagen.

Der Erfindung liegt die Aufgabe zugrunde, einen wirkungsvollen und kostengünstigen Hangausgleich darzustellen mit einem einfachen Aufbau, der nachrüstbar ist mit bekannten Einrichtungen zum Hangausgleich kombiniert werden kann und bedarfsabhängig zuschaltbar ist.

Die Aufgabe wird gelöst, indem im Übergangsbereich zwischen dem Vorbereitungsboden und dem Sieb des Siebrahmens Einrichtungen vorgesehen sind, mit denen der Getreidegutstrom beeinflußbar ist.

*Fig.1*

EP 0 473 974 A1

Die Erfindung betrifft ein Verfahren und eine Vorrichtung zum Betrieb eines Mähdreschers in Hanglagen.

Beim Einsatz von Standard-Mähdreschern in Hanglagen, d. h. Feldeinsatz entlang einer Schichtlinie oder schräg zum Hang, stellt sich eine Nutzungseinschränkung ein, insbesondere durch die einseitige Beaufschlagung des Vorbereitungsbodens und insbesondere der Reinigungssiebe sowie deren Förderorgane infolge der Seitenneigung des Mähdreschers. Die dabei auftretenden Körnerverluste steigen mit zunehmendem Neigungswinkel.

Es sind speziell konstruierte Hangmähdrescher bekannt, bei denen sich durch Verschwenken der Achsen eine ständig waagerechte Lage des Dresch- und Reinigungsteils des Mähdreschers herbeiführen läßt, während sich das gesamte Schneidwerk gegenüber dem übrigen Mähdreschergestell über einen großen Winkelbereich verdrehen läßt und auf diese Weise immer der Hangneigung angleichen kann. Dabei handelt es sich aber um ganz spezielle Mähdrescher.

Ein vollautomatischer Hangausgleich ist der Druckschrift zum Deutz-Fahr Mähdrescher M 35/36 zu entnehmen (Druck-Kennziffer 91 40300, 8903). Dieser mit dem Namen "HC-Technik" versehene Hangausgleich weist zur Erreichung einer platzsparenden Bauweise eine mittige Teilung des Vorbereitungsbodens und der Siebe auf. Ein mit einer elektronischen Wasserwaage verbundes Steuersystem nimmt über Stellmotoren ein Verschwenken des Vorbereitungsbodens und der Siebe vor in Abhängigkeit der Mähdrescher-Schräglage. Dieser Hangausgleich ist wirksam aber zeigt einen aufwendigen, kostenintensiven Aufbau.

Der Erfindung liegt als Aufgabe zugrunde, einen wirkungsvollen und kostengünstigen Hangausgleich für Mähdrescher darzustellen, der einen einfachen Aufbau besitzt, nachgerüstet werden kann, mit bekannten Einrichtungen zum Hangausgleich kombinierbar ist und bedarfsabhängig zugeschaltet werden kann.

Die Aufgabe wird erfindungsgemäß gelöst durch eine zumindest im Bereich des Außenrandes vom Vorbereitungsboden und den Sieben angeordnete Einrichtung, mit der die Getreidegutförderung beeinflußbar ist. Durch die Erfindung wird beim Befahren eines Querhanges vorteilhaft die Getreide-Anhäufung in den Randzonen des Vorbereitungsbodens beim Übergang auf die Siebe nahezu gleichmäßig auf die gesamte Siebfläche verteilt.

Hierzu bieten sich kontinuierlich wirkende pneumatische Einrichtungen an, wie auch mechanische, durch die eine intermittierend oder kontinuierlich wirkende Kraft auf die Getreidegutförderung ausgeübt wird.

Zur Bedienungsvereinfachung beziehungsweise zur Komfortverbesserung ist die erfindungsgemäße Einrichtung fernbedienbar oder mit einer selbsttätigen Steuerung kombinierbar.

Eine erfindungsgemäße Lösung der Aufgabe sieht eine Einrichtung vor, mit der ein Luftstrom, der quer zur Förderrichtung des Getreides wirkt, die Getreidegutförderung in Richtung Siebmitte des Mähdreschers gelenkt wird und foglich für eine gleichmäßige Beaufschlagung der Siebe sorgt. Damit stellt sich neben der Getreidegutumlenkung auch ein Reinigungseffekt ein, da das konzentriert auf die Randzone des Vorbereitungsbodens verlagerte Getreidegut beim Übergang auf die Siebe, bedingt durch den Querluftstrom eine bessere Trennung erfährt und sich folglich günstigere Verhältnisse für den Reinigungsteil des Mähdreschers im Querhangeinsatz einstellen.

In Ausgestaltung der Erfindung sind auf beiden Seiten der Außenwand des Mähdreschers Düsen eingesetzt, durch die der Luftstrom auf die Getreidegutförderung geleitet wird.

Zur Erzeugung des Luftstromes dient ein Gebläse, das beispielsweise auf der Außenwand des Mähdreschers oberhalb der Schüttler, im Bereich hinter dem Antriebsmotor des Mähdreschers plaziert ist und das über Luftleitungen mit den Düsen verbunden ist. Über einem dem Gebläse nachgeschalteten Schieber sind die Luftleitungen wechselseitig absperrbar, wodurch der geförderte Luftstrom jeweils der talseitigen Düse zuführbar ist.

Zur bedarfsweisen Anpassung des Luftmassenstrom an das zu erntende Getreide ist erfindungsgemäß ein regelbares Gebläse einsetzbar sowie vorteilhaft einstellbare Düsen für den Austritt des Querluftstromes in den Reinigungsteil des Mähdreschers. Vorzugsweise bietet sich an, die Düsen um eine horizontale und/oder vertikale Achse verschwenkbar auszubilden und die Düsen mit einem einstellbaren Austrittsgitter zu versehen zur gezielten Lenkung des Querluftstroms.

Dieser erfindungsgemäße und wirkungsvolle Aufbau eines Hangausgleichs für Mähdrescher ist vorteilhaft auch für bereits im Einsatz befindliche Mähdrescher nachrüstbar aufgrund des einfachen Aufbaus und stellt darüber hinaus eine kostengünstige Lösung dar zur Erweiterung des Einsatzgebietes für Standard-Mähdrescher.

Eine weitere erfindungsgemäße Lösung zur Erreichung eines Hangausgleichs wird erfindungsgemäß durch ein beweglich angeordnetes Wurfblech erzielt, das einen mechanischen Antrieb aufweist. Das Wurfblech ist vorzugsweise über ein Gelenk am Vorbereitungsboden unter einem Neigungswinkel von ca. 45° zur Außenwand angebracht und über eine Gelenkstange mit dem Siebrahmen verbunden. Erfindungsgemäß ist dabei die Gelenkstange so mit dem Wurfblech verbunden, daß durch die voneinander abweichende Bewegung des Vorbereitungsbodens zum Siebrahmen sich ein Stellweg des Wurfbleches jeweils in Richtung zur Siebrahmenmitte einstellt. Alternativ dazu bietet es sich an, das Wurfblech zwischen dem Vorbereitungsboden und der Außenwand des Mähdreschers anzuordnen oder zwischen dem Siebrahmen und der Außenwand. Der Stellweg des Wurfbleches wird dabei bestimmt zum einen durch die Relativbewegung der Bauteile zwischen denen das Wurfblech eingesetzt ist zum anderen durch den Anlenkpunkt der Gelenkstange am Wurfblech.

Als vorteilhafte Ausgestaltung der Erfindung ist vorgesehen, daß die geometrische Form des Wurfbleches den Spalt, der sich zwischen dem Vorbereitungsboden und dem Siebrahmen bildet, überdeckt beziehungsweise ausgleicht. Zur Steigerung der Einflußnahme auf die Getreidegutförderung durch das Wurfblech kann dieses mit Leiteinrichtungen versehen werden, um so auf die Masse und den Förderweg des durch das Wurfblech umgelenkten Getreides Einfluß zu nehmen.

Als weitere mechanische Lösung der Aufgabe stellt eine ortsfest an der Außenwand des Mähdreschers oder ortsfest am Vorbereitungsboden angeordnete und mit einem separaten Stetigantrieb versehene Einrichtung dar, die vorteilhaft durch eine rotierende Walze gebildet wird. Diese eingesetzt zwischen dem Vorbereitungsboden und dem Siebrahmen besitzt eine Längserstreckung, die den Stell- bzw. Schwingweg des Vorbereitungsbodens und des Siebrahmens überdeckt. Die Drehrichtung der Walze bewirkt jeweils eine Umlenkung des Getreides in Richtung zur Mitte des Siebrahmens. Zur Vermeidung von Getreideverlusten ist die Walze oberhalb mit einer sich über die gesamte Walzenlänge erstreckenden Abdeckung versehen. Alternativ zu einem mechanischen Antrieb der Walze kann dieser auch pneumatisch über das übliche Reinigungsgebläse oder das in der vorliegenden Erfindung beschriebene Zusatzgebläse erfolgen.

Zur Darstellung des Mähdreschereinsatzes in Hanglagen ist erfindungsgemäß weiter vorgesehen, im Mähdrescher vorhandene Einrichtung beziehungsweise Komponenten zu nutzen zur Darstellung eines Querluftstromes, der die Getreidegutförderung über die gesamte Siebfläche verteilt. Vorteilhaft bietet sich dazu die Verwendung des Wurfelevators an insbesondere bei Mähdreschern, die mit je einem Wurfelevator auf jeder Außenwandseite versehen sind. Erfindungsgemäß sind dabei die für das Überkehrsystem eingesetzten Wurfelevatoren so beeinflußbar, daß deren durch Förderkanäle geleitete Getreidegut nicht auf den Vorbereitungsboden sondern auf die Siebe des Siebrahmens geleitet wird. Über im Förderkanal eingebrachte Stellorgane ist das durch das Überkehrsystem geförderte Gut quer zur Getreidegutförderung im Bereich des Übergangs vom Vorbereitungsboden auf die Siebe in den Reinigungsteil des Mähdreschers einbringbar, wobei sich vorteilhaft eine gleichmäßige Beaufschlagung der gesamten Siebfläche auch im Hangeinsatz des Mähdreschers einstellt. Diese erfindungsgemäße Umlenkung der Förderung des Überkehrsystems auf die Siebe verringert vorteilhaft die Getreidegutförderung des Vorbereitungsbodens und bewirkt damit eine verbesserte Reinigung des Getreides. Vorzugsweise bietet sich an, den Förderkanal mit Umlenkeinrichtungen zu versehen, um das Überkehrsystem in Abhängigkeit der Schräglage beeinflußen zu können. Bei geringen Schräglagen kann es beispielsweise sinnvoll sein, den Förderstrom des durch die Überkehr geförderten Gutes aufzuteilen, wobei ein Teilstrom dem Vorbereitungsboden und der übrige quer zur Getreidegutförderung auf die Siebe geleitet wird. In einer Ausgestaltung dieser erfindungsgemäßen Lösung ist weiter daran gedacht, beim Hangeinsatz über Stellorgane im Förderkanal des bergseitig liegenden Wurfelevators, diesen außer Kraft zu setzen, z. B. durch Umlenkung des Luftstromes ins Freie oder derart in den Reinigungsteil des Mähdreschers zur Vermeidung einer ungewollten Getreidegutverlagerung auf die Talseite. Als eine Alternativlösung bietet sich dazu an, die Förderkanäle beider Wurfelevatoren miteinander zu verbinden und beim Hangeinsatz zur Verstärkung des Querluftstromes den Förderstrom (Luftstrom) vom bergseitig angeordneten Wurfelevartor in den Förderkanal des hangseitig liegenden Wurfelevatorsystems umzuleiten.

Alle diese zuvor angesprochenen Lösungen, insbesondere die Beeinflussung durch den Luftstrom lassen sich vorteilhaft auch auf Mähdrescher übertragen, die bereits mit einem Hangausgleich, z.B. gemäß der Lösung des Deutz-Fahr-Mähdreschers, versehen sind, um die vorhandenen Lösungen zu ergänzen bzw. zu verbessern.

Die gemäß der Aufgabe geforderte bedarfsweise Zuschaltung der erfindungsgemäßen Einrichtung ist auch bei der intermittierend arbeitenden Lösung möglich, bei der z.B. durch eine Montageöffnung in der Außenwand des Mähdreschers die Gelenkstange zur Wurfklappe ausgehängt und die Wurfklappe selber spielfrei befestigt wird.

Ausführungsbeispiele der Erfindung sind in den Figuren dargestellt, die nachfolgend beschrieben werden.

Es zeigen:

Fig.1:      Einen Mähdrescher in der Seitenansicht, der mit einem Zusatzgebläse versehen ist, zur Erzeugung eines Luftstromes quer zur Getreidegutförderung,

Fig.2:      die Heckeinsicht eines Mähdreschers, der sich in einer Querhangstellung befindet und dem die Anordnung der Austrittsdüsen für den Zusatzluftstrom entnehmbar sind,

Fig.3: die Einzelheit des mechanisch intermittierend betätigten Wurfblechs zur Beeiflußung der Getreidegutförderung,

Fig.4: die Ansicht eines Mähdreschers gemäß Fig.1, versehen mit einem in der Wirkungsweise abgewandelten Überkehrsystem,

Fig.5: die Heckeinsicht entsprechend Fig.2, die eine mechanische Einrichtung aufweist, mit der eine kontinuierliche Ein- flußnahme auf die Getreidegutförde- rung möglich ist.

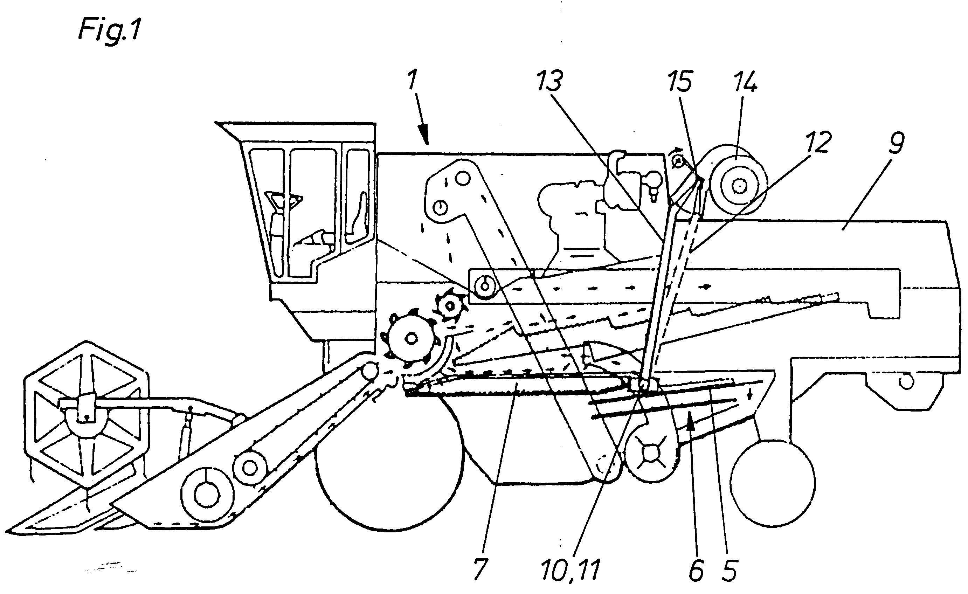

Einen in der Seitenansicht abgebildeten Mähdrescher 1, dem der grundsätzliche Aufbau ein- schließlich seiner wichtigsten Komponenten ent- nehmbar ist, zeigt Fig.1. Der Mähdrescher 1 ist versehen mit einer erfindungsgemäßen Einrichtung, durch ein Standard-Mähdrescher auch für die Getreideernte in Hanglagen einsetzbar ist. Als Ausgleich für die einseitige Beaufschlagung des Reinigungsteils des Mähdreschers während eines Feldeinsatzes quer zum Hang ist eine zusätzliches Gebläse 14 vorgesehen, das über zwei seitlich des Mähdreschers 1 verlaufende Luftleitungen 12, 13 mit Düsen 10,11 verbunden ist. Der vom Gebläse 14 erzeugte Luftstrom bewirkt eine gewollte Beeinflußung der Getreidegutförderung im Reinigungsteil des Mähdreschers. Der Austritt des Luftstroms erfolgt durch Düsen 10, 11, die in der Außenwand 9 im Bereich des Übergangs vom Vorbereitungsboden 7 zum Siebrahmen 6 eingesetzt sind, wodurch das Getreidegut bedingt durch den Querluftstrom über die gesamte Fläche des Siebes 5 verteilt wird. Durch einen unmittelbar dem Gebläse nachgeschalteten Schieber 15 kann immer die Düse mit dem gesamten Luftstrom beaufschlagt werden, die bei der Hangfahrt talwärts angeordnet ist. Zur Be- dienungserleichterung und Sicherstellung, daß im- mer die richtige Düse 10, 11 beaufschlagt ist, kann der Schieber 15 mit einer selbsttätigen, automatischen Steuerung, z. B. unterstützt durch eine elektronische Wasserwaage betätigt werden.

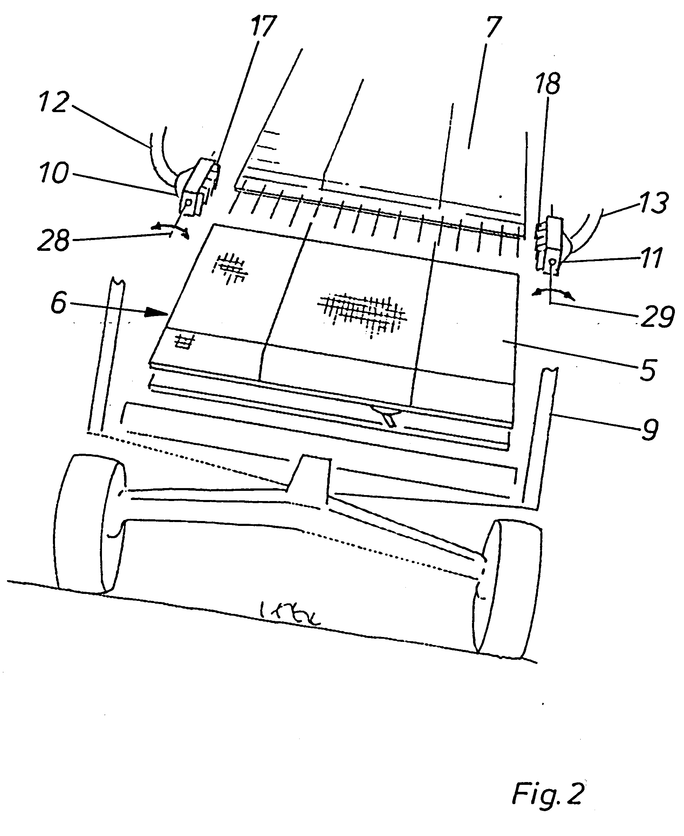

In der Fig.2 wird der Einbau und die Funktion der Düsen 10, 11 weiter verdeutlicht. Zur Optimierung der Luftstrom-Anpassung an unterschiedliche Getreidearten und Hanglagen sind die Düsen 10, 11 um die Horizontalachse 28, 29 verstellbar. Der Austritt des Luftstromes ist weiter beeinflußbar durch das Austrittsgitter 17, 18. Alternativ dazu bietet sich auch eine weitere Verschwenkbarkeit der Düsen 10, 11 um eine Vertikalachse an, vergleichbar einer kardanischen Anlenkung. Die Fig.2 verdeutlicht, daß durch den aus den Düsen 10, 11 austretenden Luftstrom Einfluß auf die Getreidegutförderung ausgeübt werden kann, wenn das Getreidegut vom Vorbereitungsboden 7 auf das tieferliegende Sieb 5 des Siebrahmens 6 fällt.

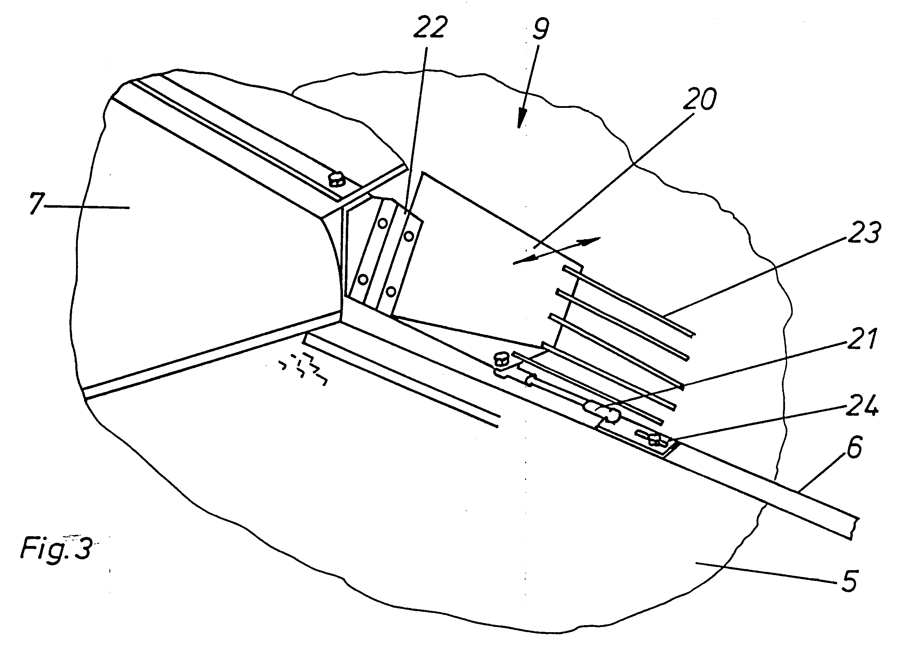

Ein mechanisches Bauteil zur Beeinflußung der Getreidegutförderung zeigt die Fig.3 in Form des Wurfbleches 20. Das an der Randzone 8 auf der zum Sieb 5 gerichteten Stirnseite des Vorbereitungsbodens 7 durch ein Gelenk 22 befestigte Wurfblech 20 ist unter einem Winkel von nahezu 45° zur Außenwand 9 angebracht. An dem vom Gelenk 22 gegenüberliegenden Ende des Wurfbleches 20 ist dieses über eine Gelenkstange 21 mit dem Siebrahmen 6 gelenkig verbunden. Die zur Beeinflußung der Getreidegutförderung durch das Wurfblech 20 erforderliche Schwenkbewegung, ausgehend von der in Fig.3 gezeigten Neutrallage, bei der das Wurfblech 20 an der Außenwand 9 des Mähdrescher 1 anliegt, wird erreicht durch die gegenläufige Bewegung des Siebrahmens 6 zum Vor- bereitungsboden 7. Durch das Aufeinanderzubewe- gen des Vorbereitungsbodens 7 und des Siebrahmens 6 kommt es zu einem gewollten Auslenken des Wurfblechs 20 in Richtung der Siebmitte, das sich damit von der Außenwand 9 abhebt. Diese Wurfblechbewegung beeinflußt das teilweise an die Randzone 8 des Vorbereitungsboden 7 befindliche Getreidegut beim Stufensprung auf das Sieb 5 in Richtung Siebmitte. Zur Optimierung der Wirkung des Wurfbleches 20 ist dieses mit einer Leiteinrichtung 23, z. B. ein Lochblech oder Rundstäben ergänzbar. Um auch Extremsituationen gerecht zu werden, d. h. einer hohen einseitigen Beaufschlagung der Randzone 8 mit Getreidegut, besitzt das Wurfblech 20 eine Gestaltung, durch die in der Neutrallage (s. Figur 3) der seitliche Spalt an der Außenwand 9 zwischen der Randzone 8 des Vorbereitungsbodens 7 und dem Siebrahmen 6 abgedeckt ist.

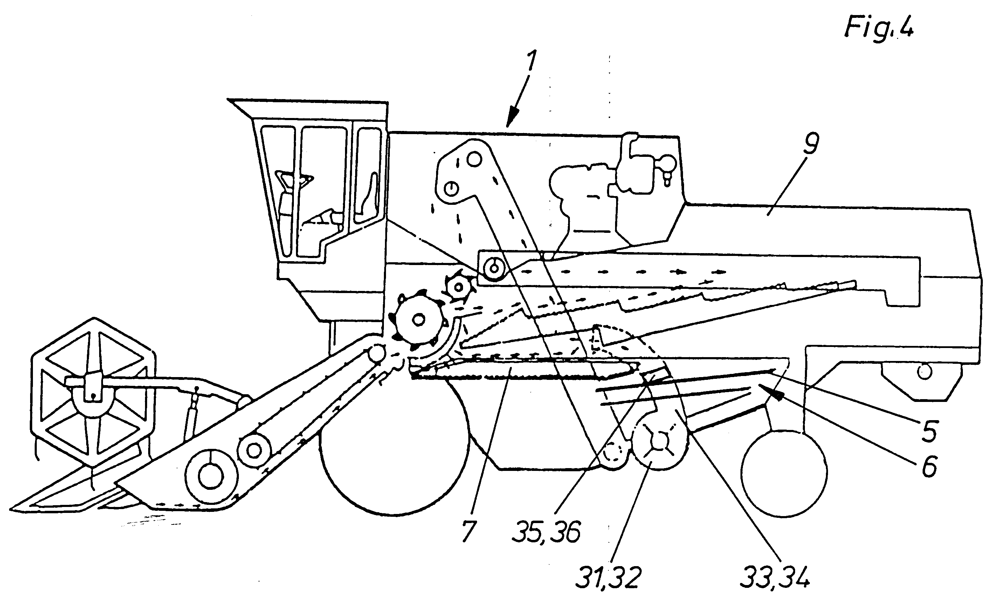

Die Fig.4 zeigt eine weitere Maßnahme für einen Hangausgleich eines Mähdreschers, bei dem das regulär für Standardmähdrescher verwendete Überkehrsystem zur Beeinflußung der Getreidegutförderung im Reinigungsteil des Mähdreschers Anwendung findet. Die auf jeder Seite an der Außenwand 9 des Mähdreschers 1 angeordneten Wurfelevatoren (31, 32) sind versehen mit je einem Förderkanal (33, 34), durch den das geförderte Gut im Regelfall (Mähdreschereinsatz in der Ebene) auf den Vorbereitungsboden (7) geleitet wird. Für den Hangeinsatz ist erfindungsgemäß der Förderkanal (33, 34) im Bereich zwischen dem Vorbereitungsboden (7) und den Sieben (5) mit einem Förderkanalaustritt (35, 36) versehen, durch den abhängig von der Schräglage des Mähdreschers das von den Wurfelevatoren (31, 32) geförderte Gut auf die Siebe (5) geleitet wird und dabei den bei Hangeinsatz verlagerten Getreide-Förderstrom beim Übergang vom Vorbereitungsboden (7) auf die Siebe (5) beeinflußbar ist zur gleichmäßigen Beaufschlagung der Siebe.

Als eine Alternativlösung zu der in Fig.3 darge-

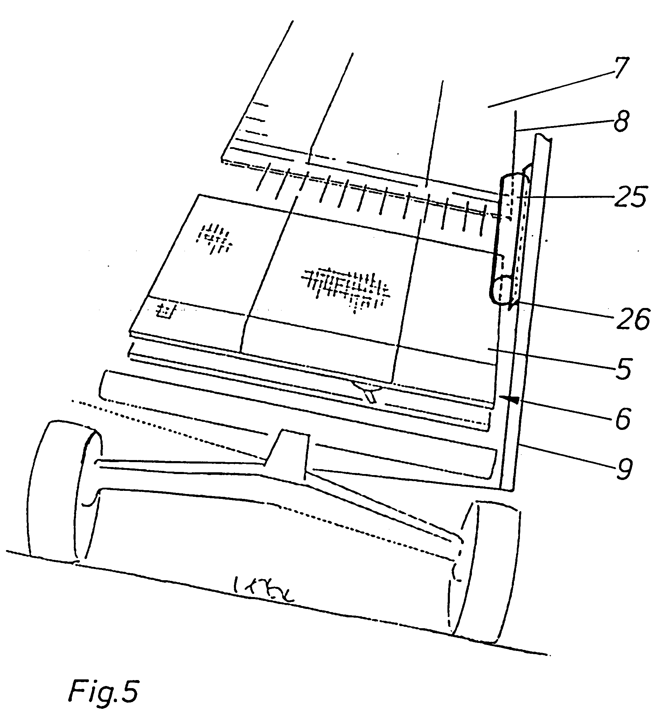

stellten, mechanischen Einrichtung zur Beeinfluß-ung des Getreidegutes ist in Fig.5 eine Walze 25 vorgesehen, die ortsfest an der Außenwand 9 nahezu horizontal zwischen dem Vorbereitungsboden 7 und dem Sieb 5 des Siebrahmens 6 befestigt ist und einen Stetigantrieb aufweist. Durch die Walze 25 ist eine kontinuerliche, wirksame Umlenkung und gleichmäßige Verteilung des seitlich an der Randzone 8 des Vorbereitungsbodens 7 Getreidegutes auf die Fläche des Siebes 5 möglich. Eine Abdeckung 26, oberhalb der Walze angebracht, verhindert bei starker Getreidegutbeaufschlagung der Walze 25 einen Getreidegutverlust zwischen der Außenwand 9 und der Walze 25. Eine Optimierung der in Fig.4 dargestellten Lösung kann durch ein in Richtung Siebmitte gerichtetes, beidseitig an der Außenwand 9 angebrachtes "Förderband" erzielt werden zur Querförderung des Getreidegutes bis nahe in die Mittelzone des Siebes 5.

**Patentansprüche**

1. Verfahren und Vorrichtung zum Betrieb eines Mähdreschers in Querhanglagen, wobei der Mähdrescher zumindest ein Dreschwerk und Strohschüttler sowie einen unterhalb des Drehschwerks angenordneten Vorbereitungsboden und einen daran anschließenden Ober- und Untersiebe beinhaltenden Siebrahmen aufweist und die Getreidegutförderung in Abhängigkeit zur Querhanglange zumindest im Bereich der Siebe beeinflußbar ist,
dadurch gekennzeichnet, daß der Vorbereitungsboden (7) und der Siebrahmen (6) abge-sehen von ihren Schwingbewegungen lagesta-bil im Mähdrescher angeordnet sind und daß der Querhanglage entgegenwirkend im Über-gangsbereich zwischen dem Vorbereitungsbo-den (7) und den Sieben (5) bzw. Siebrahmen (6) zumindest an deren talseitigem Außenrand Einrichtungen vorgesehen sind, die eine im wesentlichen quer zur Längsachse des Mähdreschers gerichtete Kraft auf das Getreidegut ausüben, zur Vergleichmäßigung der Verteilung des Getreidegutes auf der Siebfläche.

2. Verfahren nach Anspruch 1,
dadurch gekennzeichnet, daß eine kontinuier-lich wirkende pneumatische Einrichtung vorge-sehen ist.

3. Verfahren nach Anspruch 1,
dadurch gekennzeichnet, daß eine mechanische Einrichtung vorgesehen ist, die auf das Getreidegut eine intermittierend wirkende Kraft ausübt.

4. Verfahren nach Anspruch 1,

dadurch gekennzeichnet, daß eine mechanische Einrichtung Anwendung findet, die auf das Getreidegut eine kontinuierlich wirkende Kraft ausübt.

5. Verfahren nach Anspruch 1,
dadurch gekennzeichnet, daß die Einrichtung eine Fernbedienung aufweist.

6. Verfahren nach Anspruch 1,
dadurch gekennzeichnet, daß eine selbsttätige Steuerung für die Einrichtung vorgesehen ist.

7. Vorrichtung zur Durchführung des Verfahren nach den Ansprüchen 1 bis 6,
dadurch gekennzeichnet, daß zur Beeinflussung des vom Vorbereitungsboden (7) auf das Sieb (5) geleitete Getreidegut ein quer zur Förderrichtung des Getreides wirkender Luftstrom über ortsfest in der Außenwand (9) des Mähdreschers (1) eingesetzte Düsen (10, 11) gerichtet ist.

8. Vorrichtung nach Anspruch 7,
dadurch gekennzeichnet, daß der Luftstrom durch ein beide Düsen (10, 11) über Luftleitungen (12, 13) versorgendes Gebläse (14) erzeugt wird.

9. Vorrichtung nach den Ansprüchen 7 und 8,
dadurch gekennzeichnet, daß die Luftleitungen (12, 13) wechselseitig durch einen Schieber (15) absperrbar sind.

10. Vorrichtung nach den Ansprüchen 7 bis 9,
dadurch gekennzeichnet, daß ein Luftmassenstrom regelndes Gebläse (14) eingesetzt ist.

11. Vorrichtung nach den Ansprüchen 7 bis 10,
dadurch gekennzeichnet, daß die Düsen (10, 11) um eine horizontal und/oder vertikale Achse schwenkbar sind.

12. Vorrichtung nach einem der Ansprüche 7 bis 11,
dadurch gekennzeichnet, daß ein einstellbares Austrittsgitter (17, 18) für die Düsen (10, 11) vorgesehen ist.

13. Vorrichtung zur Durchführung des Verfahrens nach den Ansprüchen 1 bis 3,
dadurch gekennzeichnet, daß eine beweglich angeordnete Einrichtung mit einem mechanischen Antrieb vorgesehen ist.

14. Vorrichtung nach den Ansprüchen 13 bis 17,
dadurch gekennzeichnet, daß die Einrichtung ein Wurfblech (20) aufweist, das über ein Gelenk (22), unter einem Neigungswinkel von ca 45° zur Außenwand (9) an der Randzone (8) des Vorbereitungsbodens (7) angerbracht ist und durch eine Gelenkstange (21) mit dem Siebrahmen (5) verbunden ist.

15. Vorrichtung nach Anspruch 13,
dadurch gekennzeichnet, daß ein am Vorbereitungsboden (7) angeordnetes Wurfblech (20) eingesetzt ist, das mit der Außenwand (9) verbunden ist.

16. Vorrichtung nach Anspruch 13,
dadurch gekennzeichnet, daß ein am Siebrahmen (6) angeordnetes Wurfblech (20) vorgesehen ist, das an der Außenwand (9) angelenkt ist.

17. Vorrichtung nach den Ansprüchen 13 bis 16,
dadurch gekennzeichnet, daß der Stellweg des Wurfbleches (20) durch die Relativbewegung zwischen dem Vorbereitungsbodens (7) und der Außenwand (9), bzw. der Relativbewegung zwischen dem Siebrahmen (6) und der Außenwand (9) oder durch die zueinander gegenläufige Bewegung des Vorbereitungsbodens (7) und des Siebrahmens (6) bestimmt ist.

18. Vorrichtung nach den Ansprüchen 13 bis 17,
dadurch gekennzeichnet, daß die geometrische Form des Wurfbleches (20) einen Spalt zwischen dem Vorbereitungsboden (7) und dem Siebrahmen (6) ausgleicht.

19. Vorrichtung nach den Ansprüchen 13 bis 18,
dadurch gekennzeichnet, daß an dem dem Gelenk (22) des Wurfbleches (20) gegenüberliegenden Ende Leiteinrichtungen (23) vorgesehen sind.

20. Vorrichtung zur Durchführung des Verfahrens nach den Ansprüchen 1 bis 6,
dadurch gekennzeichnet, daß eine an der Außenwand (9) ortsfest gelagerte und mit einem Stetigantrieb versehene Einrichtung vorgesehen ist.

21. Vorrichtung nach Anspruch 20,
dadurch gekennzeichnet, daß eine zwischen dem Vorbereitungsboden (7) und dem Siebrahmen (6) angebrachte, den Stellweg beider Anbauteile überdeckende Walze (25), Förderband oder dergl. eingesetzt ist, deren Drehrichtung das Getreidegut in Richtung der Siebmitte fördert.

22. Vorrichtung nach den Ansprüchen 20 und 21,
dadurch gekennzeichnet, daß oberhalb der Walze (25) eine die Längserstreckung der Walze (25) des Förderbandes oder dergl. überdeckende Abdeckung (26) vorgesehen ist.

23. Vorrichtung zur Durchführung des Verfahrens nach den Ansprüchen 1 bis 6,
dadurch gekennzeichnet, daß über eine im Mähdrescher (1) vorhandene Einrichtung ein quer zur Förderrichtung des Getreides wirkende Kraft erzeugt wird.

24. Vorrichtung nach Anspruch 23,
dadurch gekennzeichnet, daß zumindest ein im Überkehrsystem des Mähdreschers vorhandener Wurfelevator (31, 32) eingesetzt ist, der durch eine quer zur Förderrichtung des Getreides wirkende Kraft das Getreidegut auf die Siebe (5) verteilt.

25. Vorrichtung nach den Ansprüchen 23 und 24,
dadurch gekennzeichnet, daß beim Hangeinsatz des Mähdreschers der jeweils talwärts angeordnete Wurfelevator (31, 32) die Kraft erzeugt.

26. Vorrichtung nach den Ansprüchen 23 bis 25,
dadurch gekennzeichnet, daß ein mit dem Wurfelevator (31, 32) verbundener Förderkanal (33, 34) im Bereich zwischen dem Aufbereitungsboden (7) und dem Siebrahmen (5) endseitig Stellorgane zur Beeinflußung der Förderkanalaustritte (35, 36) und deren Richtung aufweist.

27. Vorrichtung nach den Ansprüchen 23 bis 26,
dadurch gekennzeichnet, daß die Förderkanäle (33, 34) beider Wurfelevatoren (31, 32) miteinander verbindbar sind und beim Hangeinsatz der vom bergseitig liegenden Wurfelevator (31, 32) erzeugte Luftstrom zum gegenüberliegenden Förderkanal (33, 34) geleitet wird.

Fig.1

EP 0 473 974 A1

Fig. 2

Fig. 3

EP 0 473 974 A1

Fig.4

Fig.5

Europäisches
Patentamt

EUROPÄISCHER RECHERCHENBERICHT

Nummer der Anmeldung

EP    91 11 3492
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-U-8 804 062 (HUNING-WESSELER)<br><br>* Seite 5, Absatz 1 - Seite 6, letzter Absatz; Abbildungen 1-4 * | 1,4,6, 13,23 | A01F12/44 |
| Y | --- | 20,21 | |
| X | DE-A-2 851 777 (CLAAS)<br><br>* Seite 7, letzter Absatz - Seite 8, letzter Absatz; Abbildungen 1-4 * | 1,3,13, 14,17,23 | |
| Y | --- | 20,21 | |
| X | DE-A-2 743 733 (GEBR. CLAAS)<br><br>* Seite 5, letzter Absatz - Seite 6, Absatz F; Abbildungen 1,2 * | 1,3,13, 14,17, 18,23 | |
| | --- | | |
| X | DE-A-2 011 413 (GROHMANN)<br><br>* Seite 3, letzter Absatz - Seite 4, letzter Absatz; Abbildungen 1-3 * | 1,3,13, 16,17,23 | **RECHERCHIERTE SACHGEBIETE (Int. Cl.5 )** |
| A | --- | 14 | A01F |
| X | GB-A-1 163 486 (LOUKS ET AL.)<br><br>* Seite 3, Zeile 115 - Seite 7, Zeile 109; Abbildungen 1-28 * | 1,2,6-9, 20,23 | A01D |
| | --- | | |
| X | EP-A-0 091 538 (KLÖCKNER-HUMBOLDT-DEUTZ)<br><br>* Seite 10, Zeile 6 - Seite 20, Zeile 17; Abbildungen 1-6 * | 1,2,5-7, 11,13, 20,23-26 | |
| Y | --- | 12 | |

-/--

Der vorliegende Recherchenbericht wurde für alle Patentansprüche erstellt

| Recherchenort | Abschlußdatum der Recherche | Prüfer |
|---|---|---|
| DEN HAAG | 11 DEZEMBER 1991 | WILLIAMS M.J. |

EPO FORM 1503 03.82 (P0403)

Europäisches
Patentamt

**EUROPÄISCHER RECHERCHENBERICHT**

Nummer der Anmeldung

EP    91 11 3492
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 456 652 (LOUKS ET AL.)<br><br>* Spalte 3, Zeile 46 - Spalte 6, Zeile 65; Abbildungen 1-16 * | 1,2,6-9, 20,23 | |
| Y | | 12 | |
| A | | 24 | |
| | --- | | |
| X | EP-A-0 282 736 (DEERE & COMPANY)<br><br>* Spalte 4, Zeile 19 - Spalte 8, Zeile 27; Abbildungen 1-5 * | 1,2,4,6, 7,20, 23-25 | |
| | --- | | |
| X | US-A-3 910 285 (SIETMANN)<br><br>* Spalte 3, Zeile 9 - Spalte 4, Zeile 16; Abbildungen 1-10 * | 1,2, 6-10,20, 23 | |
| | --- | | |
| X | US-A-2 611 487 (STEVENSON)<br><br>* Spalte 2, Zeile 34 - Spalte 5, Zeile 13; Abbildungen 1-9 * | 1,2, 6-10,20, 23 | RECHERCHIERTE SACHGEBIETE (Int. Cl.5 ) |
| A | | 24,27 | |
| | --- | | |
| X | US-A-2 694 493 (ODEGARDEN)<br><br>* Spalte 2, Zeile 13 - Zeile 71; Abbildungen 1-8 * | 1,2,6-9, 20,23 | |
| | --- | | |
| X | US-A-2 692 679 (LINDBERG)<br><br>* Spalte 1, Zeile 29 - Spalte 3, Zeile 19; Abbildungen 1,2 * | 1,2,7, 10,20,23 | |
| A | | 24,25 | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 11 DEZEMBER 1991 | WILLIAMS M.J. |

EPO FORM 1503 03.82 (P0403)

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | WO-A-8 704 588 (HARRIS)<br>* Seite 5, Zeile 20 - Seite 11, Zeile 7; Abbildungen 1-6 *<br><br>·<br>·<br>·<br>·<br>·<br><br>----- | 1,22 | |
| | | | **RECHERCHIERTE SACHGEBIETE (Int. Cl.5 )** |

Der vorliegende Recherchenbericht wurde für alle Patentansprüche erstellt

| Recherchenort | Abschlußdatum der Recherche | Prüfer |
|---|---|---|
| DEN HAAG | 11 DEZEMBER 1991 | WILLIAMS M.J. |